# EUROPEAN PATENT APPLICATION

(11) **EP 4 644 723 A1**
(43) Date of publication of application: **05.11.2025**
(21) Application number: 23911758.3
(22) Date of filing: 14.12.2023
(51) Int. Cl.: F16F 1/06, B21F 35/00, F16F 1/02

(54) **COIL SPRING AND METHOD FOR MANUFACTURING SAME**

(30) Priority: 27.12.2022 JP 2022210049
(71) Applicant: NHK Spring Co., Ltd., Yokohama-shi, Kanagawa 236-0004 (JP)
(72) Inventor: TAKAHASHI, Keita, Yokohama-shi, Kanagawa 236-0004 (JP); OKABE, Satoshi, Yokohama-shi, Kanagawa 236-0004 (JP); MINO, Yoshinobu, Yokohama-shi, Kanagawa 236-0004 (JP); KUMAI, Shintaro, Yokohama-shi, Kanagawa 236-0004 (JP); SHIRAISHI, Tohru, Yokohama-shi, Kanagawa 236-0004 (JP)
(74) Representative: AWA Sweden AB
(86) International application number: PCT/JP2023/044883
(87) International publication number: WO 2024/142977

(57) **Abstract**

According to an embodiment, a coil spring is formed of a wire wound into a helical shape, and at least part of the wire has a hardness distribution varying in a circumferential direction around an axis of the wire.

## Description

### Technical Field

The present invention relates to a coil spring and a manufacturing method of the same

### Background Art

For example, as disclosed in Patent Literature 1, techniques of varying a hardness distribution of a wire for a coil spring depending on the depth from its surface is known. More specifically, in the method disclosed in Patent Literature 1, a quenching process is performed in which a wire (spring steel wire) passes through a high-frequency heating coil, the surface layer alone is heated to temperatures higher than the austenitizing temperature, and the core is cooled from the temperature lower than the tempering temperature of the next process, followed by a tempering process in which the entire wire is heated. This process forms a layer whose hardness is lower than that of the surface or the area around the core inside the wire.

### Citation List

### Patent Literature

Patent Literature 1: JP 6053916 B

### Summary of Invention

### Technical Problem

In some cases, required properties vary depending on the circumferential position of the wire, such as the inner diameter side facing the coil axis of the coil spring and the outer diameter side opposite thereto. For example, shot peening is applied to wires in common coil spring manufacturing processes to provide compressive residual stress. The distribution of the compressive residual stress provided by this shot peening may be uneven in the circumferential direction of the wire. Adjusting other properties in view of such variations in the compressive residual stress may achieve a coil spring with improved performance.

The present invention addresses such circumstances and aims to provide a coil spring with improved properties in the circumferential direction of a wire and a manufacturing method of the same.

### Solution to Problem

According to one embodiment, a coil spring is formed of a wire wound into a helical shape, and at least part of the wire has a hardness distribution varying in a circumferential direction around an axis of the wire.

For example, the wire includes a first layer, a second layer inside the first layer, and a third layer inside the second layer. In this case, hardness of the second layer may be lower than those of the first layer and the third layer.

A surface of the wire has a first position and a second position spaced apart from the first position in the circumferential direction. Further, a first hardness distribution along a first line segment connecting the first position with the axis and a second hardness distribution along a second line segment connecting the second potion with the axis differ.

For example, the first hardness distribution and the second hardness distribution differ in at least one of a width of the first layer, a width of the second layer, a width of the third layer, a minimum value of a hardness in the second layer, and a depth of a position with the minimum value from the surface.

Compressive residual stress may be provided to each of a first range along the first line segment and a second range along the second line segment. In this case, the second range may extend deeper from the surface than the first range, and a portion of the second layer along the second line segment may be formed at a position deeper than a portion along the first line segment.

For example, the first position is located on an inner diameter side of the wire, and the second position is located on an outer diameter side of the wire.

The wire may include a first layer and a second layer located inside the first layer, and hardness of the first layer may be smaller than hardness of the second layer. In this case, the first hardness distribution and the second hardness distribution may differ. For example, a difference between the first hardness distribution and the second hardness distribution results from at least one of a width of the first layer, a width of the second layer, and a minimum value of hardness in the first layer in the first hardness distribution differing from those of the second hardness distribution.

According to an embodiment, a manufacturing method of coil spring includes forming the wire into a helical shape, attaching a first terminal and a second terminal, which are connected to a power source capable of supplying alternating current, to the wire, and forming a hardness distribution varying in the circumferential direction on at least part of the wire by heating the wire by applying alternating current thereto through the first terminal and the second terminal.

The manufacturing method may further include providing a conductor that is electrically floating at a position that generates proximity effect before applying the alternating current to the wire.

The manufacturing method may further include performing shot peening on the wire formed into the helical shape to provide compressive residual stress to the wire.

### Advantageous Effects of Invention

The present invention can provide a coil spring with improved properties in the circumferential direction of a wire and a manufacturing method of the same.

### Brief Description of Drawings

FIG. 1 is a schematic perspective view of a coil spring of according to one embodiment.
FIG. 2 is a schematic cross-sectional view showing an example of a configuration applicable to the coil spring.
FIG. 3 is a graph showing an example of a first hardness distribution along a first line segment.
FIG. 4 is a graph showing an example of a second hardness distribution along a second line segment.
FIG. 5 is a graph showing an example of a first hardness distribution and a first residual stress distribution along the first line segment.
FIG. 6 is a graph showing an example of a second hardness distribution and a second residual stress distribution along the second line segment.
FIG. 7 is a graph showing a hardness distribution and a residual stress distribution according to a comparative example.
FIG. 8 is a flowchart showing an example of a coil spring manufacturing method.
FIG. 9 is a diagram showing a schematic configuration of an alternating current heating device usable in surface quenching.
FIG. 10 is a schematic side view of a wire, a conductor, and a ferromagnetic body that are assembled in the manner shown in FIG. 9.
FIG. 11 is a schematic diagram to illustrate the proximity effect.
FIG. 12 is a graph showing another example of a hardness distribution that can be provided to a wire.

### Mode for Carrying Out the Invention

An embodiment will be described hereinafter with reference to the accompanying drawings. Usage of a coil spring disclosed in the present embodiment is not particularly limited. For example, the coil spring can be used in a suspension device for a vehicle.

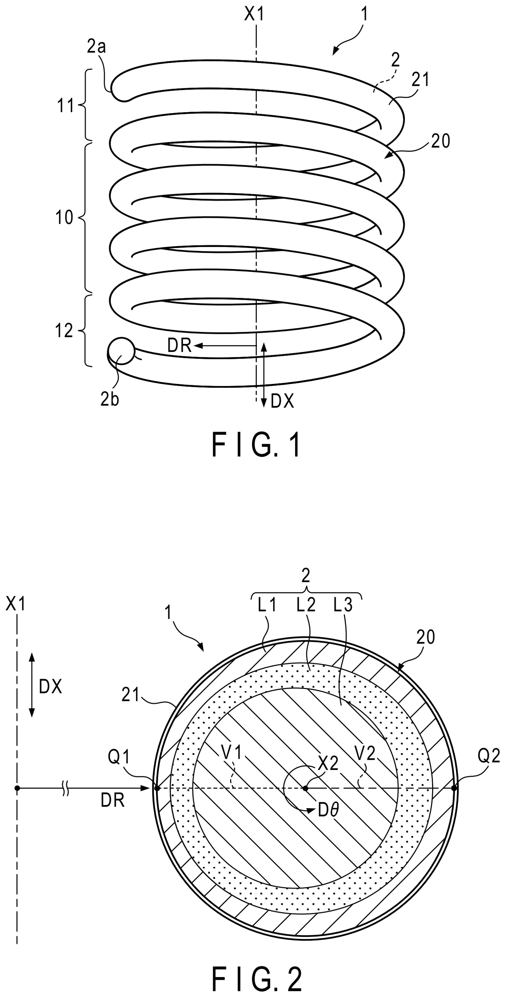

FIG. 1 is a schematic perspective view of a coil spring 1 according to the present embodiment. The coil spring 1 has a wire 2 helically wound around a coil axis X1. For example, the wire 2 is formed from spring steel and its surface 20 is entirely coated with a coating film 21. The following description defines an axial direction DX parallel to the coil axis X1 and a radial direction DR around the coil axis X1.

The coil spring 1 comprises an effective portion 10, a first end turn portion 11, and a second end turn portion 12. The effective portion 10 is located between the first end turn portion 11 and the second end turn portion 12. For example, the first end turn portion 11 is a range from a first terminal 2a to a one turn of the wire 2; the second end turn portion 12 is a range from a second terminal 2b to a one turn of the wire 2. In the effective portion 10, the wire 2 is wound several times.

FIG. 2 is a schematic cross-sectional view showing an example of a configuration applicable to the coil spring 1. This cross section corresponds to a transverse section perpendicular to an axis X2 of the wire 2. A circumferential direction Dθ around the axis X2 is defined as illustrated in the figure. In the present embodiment, at least part of the wire 2 has a hardness distribution varying in the circumferential direction Dθ. The following describes an example of this configuration with reference to FIG. 2.

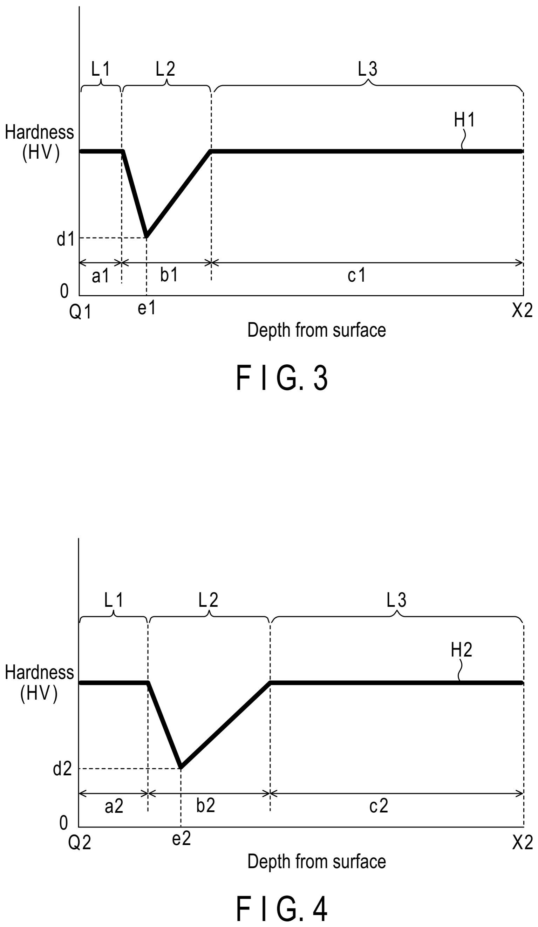

In the example of FIG. 2, the wire 2 includes a first layer L1, a second layer L2 inside the first layer L1, and a third layer L3 inside the second layer L2. The hardness of the second layer L2 is smaller than the hardness of each of the first layer L1 and the third layer L3. As described in later with reference to FIG. 3 and the like, the hardness of the second layer L2 has a gradient in the radial direction DR.

The surface 20 corresponds to the outer surface of the first layer L1. For example, the first layer L1 and the second layer L2 each have the illustrated ring shape. The configuration is not limited to this example. That is, the first layer L1 and the second layer L2 may be provided in a portion of the circumferential direction Dθ.

The surface 20 of the wire 2 is a regular circle around the axis X2. In contrast, in the example of FIG. 2, the boundary between the first layer L1 and the second layer L2 and the boundary between the second layer L2 and the third layer L3 are in oval shape whose center is deviated from the axis X2. As another example, the shape of these boundaries may be a circular shape deviated from the axis X2.

Commonly, ensuring the settling resistance of the coil spring requires increasing the hardness of the wire. However, higher hardness of the wire accelerates crack propagation in cases where corrosion pit occurs around the surface, increasing the risk of early breaking of the coil spring.

In contrast, the configuration in FIG. 2 has the harder first and third layers L1 and L3 to ensure the settling resistance of the coil spring 1. Further, the softer second layer L2 suppresses the risk of breaking and improves the corrosion fatigue resistance of the coil spring 1.

In the configuration shown in FIG. 2, the hardness distribution varies in the circumferential direction Dθ in at least part of the inside of the wire 2. To describe this variation in the hardness distribution, a first line segment V1 and a second line segment V2 shown in FIG. 2 are defined as follows.

The first line segment V1 is a straight line that connects a first position Q1 on the inner diameter side of the wire 2 of the surface 20 with the axis X2. The second line segment V2 is a straight line that connects a second position Q2 on the outer diameter side of the wire 2 of the surface 20 with the axis X2. For example, the first position Q1 is a portion of the surface 20 that is closest to the coil axis X1. For example, the second position Q2 is a portion of the surface 20 that is farthest from the coil axis X1. In the example of FIG. 2, the first position Q1, the axis X2, and the second position Q2 are arrayed in the radial direction DR.

FIG. 3 is a graph showing an example of a first hardness distribution H1 along the first line segment V1. FIG. 4 is a graph showing an example of a second hardness distribution H2 along the second line segment V2. The vertical axes in these graphs represent hardness (for example, Vickers hardness HV), and the horizontal axes represent depth from the surface 20 of the wire 2 (the distance from the surface 20).

In both of the first hardness distribution H1 and the second hardness distribution H2, the hardness decreases in the second layer L2. For example, the first layer L1 and the third layer L3 have the same hardness. The first layer L1 and the third layer L3 may have different hardness levels.

In the examples of FIG. 3 and FIG. 4, the second layer L2 has a V-shaped hardness distribution. The configuration is not limited to this example. The hardness distribution of the second layer L2 may vary in a smoothly-curved line. For example, the hardness distribution of the second layer L2 may have a range in which the hardness is substantially constant at a value lower than those of the first layer L1 and the third layer L3.

As shown in FIG. 3, the width of the first layer L1, the width of the second layer L2, the width of the third layer L3, the minimum value of the hardness in the second layer L2, and the depth of the position with the minimum value from the surface 20 (the first position Q1) in the first hardness distribution H1 are respectively defined as a1, b1, c1, d1, and e1.

As shown in FIG. 4, the width of the first layer L1, the width of the second layer L2, the width of the third layer L3, the minimum value of the hardness in the second layer L2, and the depth of the position with the minimum value (the second position Q2) from the surface 20 in the second hardness distribution H2 are respectively defined as a2, b2, c2, d2, and e2.

As can be seen from the comparison of FIG. 3 and FIG. 4, the first hardness distribution H1 and the second hardness distribution H2 differ in the present embodiment. For example, this difference between the hardness distributions H1 and H2 results from at least one of the following being different from each other: the widths a1 and a2, the widths b1 and b2, the widths c1 and c2, the minimum values d1 and d2, the depths e1 and e2.

In the examples of FIG. 3 and FIG. 4, the width a1 is smaller than the width a2 (a1<a2), the width b1 is smaller than width b2 (b1<b2), and the width c1 is greater than the width c2 (c1>c2). Further, the depth e1 is smaller than the depth e2 (e1<e2). For example, the minimum values d1 and d2 are the same. These minimum values may differ.

In the examples shown in FIG. 2 to FIG. 4, the hardness distribution inside the wire 2 varies depending on the position in the circumferential direction Dθ. For example, the hardness distribution of the wire 2 can be determined based on other properties required for each portion in the circumferential direction Dθ. Examples of other properties include compressive residual stress provided to the wire 2 by shot peening and the like. The following describes an example of the residual stress distribution and the hardness distribution of the wire 2.

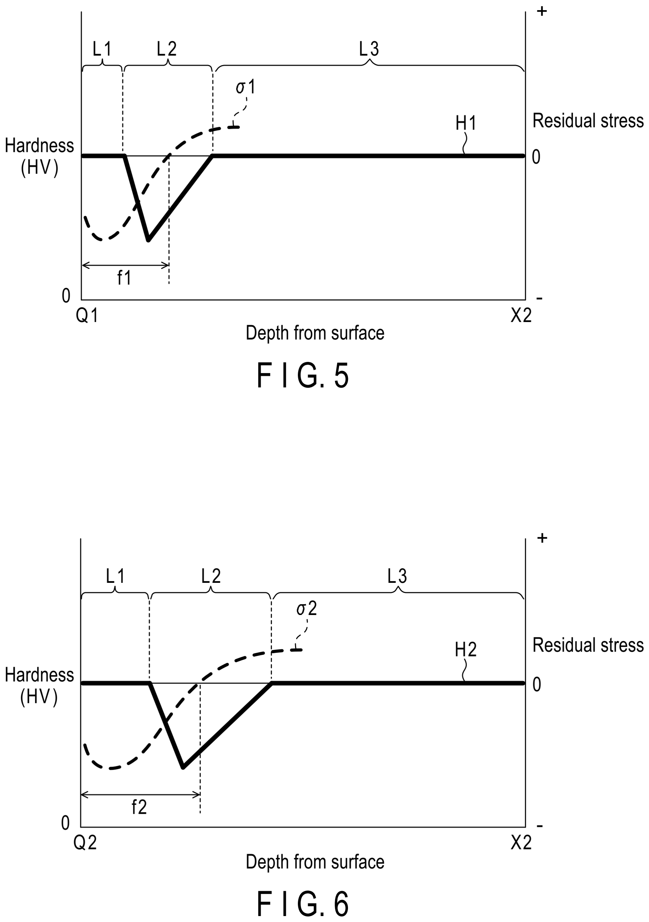

FIG. 5 is a graph showing an example of the relationship between the first hardness distribution H1 and a first residual stress distribution σ1 along the first line segment V1. FIG. 6 is a graph showing an example of the second hardness distribution H2 and a second residual stress distribution σ2 along the second line segment V2. In these graphs, the left vertical axes represent the hardness, the right vertical axes represent the residual stress, and the horizontal axes represent the depth from the surface 20 of the wire 2. In the examples of FIG. 5 and FIG. 6, a position at which the residual stress is zero corresponds to the hardness of each of the first layer L1 and the third layer L3. The hardness distributions H1 and H2 shown in FIG. 5 and FIG. 6 are the same as those shown in FIG. 3 and FIG. 4.

When shot peening is applied to the wire 2 wound into a helical shape, a portion in the outer diameter side of the surface 20 easily contacts peening media, but a portion in the inner diameter side or a portion between the windings of the wire 2 adjacent in axial direction DX is less likely to contact the peening media. In this case, the compressive residual stress is provided to deeper areas as well in a portion in the outer diameter side, but is provided to shallow areas alone in a portion in the inner diameter side. Thus, the distribution of the compressive residual stress provided by the shot peening may be uneven in the circumferential direction Dθ.

In the example of FIG. 5, the compressive residual stress is provided over a first range f1 from the surface 20 (the first position Q1). In the example of FIG. 6, the compressive residual stress is provided over a second range f2 from the surface 20 (the second position Q2). The second range f2 extends deeper than the first range f1.

In the example of FIG. 5, the first range f1 provided with the compressive residual stress overlaps the entire first layer L1 and reaches a portion of the second layer L2. However, the first range f1 does not reach the third layer L3. As another example, the first range f1 may reach a portion of the third layer L3. The peak of the compressive residual stress in the first range f1 is located closer to the surface 20 side (the first position Q1 side) than the position with the minimum hardness in the first hardness distribution H1.

In the example of FIG. 6 as well, the second range f2 provided with the compressive residual stress overlaps the entire first layer L1 and reaches a portion of the second layer L2. However, the second range f2 does not reach the third layer L3. As another example, the second range f2 may reach a portion of the third layer L3. The peak of the compressive residual stress in the second range f2 is located closer to the surface 20 side (the second position Q2 side) than the position with the minimum hardness in the second hardness distribution H2.

In this manner, in the examples of FIG. 5 and FIG. 6, the hardness distributions H1 and H2 according to the residual stress distributions σ1 and σ2 are formed. More specifically, the second range f2 of the compressive residual stress may extend deeper than the first range f1, and a portion of the second layer L2 along the second line segment V2 is formed at a position deeper from the surface 20 than a portion along the first line segment V1. This makes the overlapping manner of the first range f1 and the second layer L2 and the overlapping manner of the second range f2 and the second layer L2 substantially equivalent to each other.

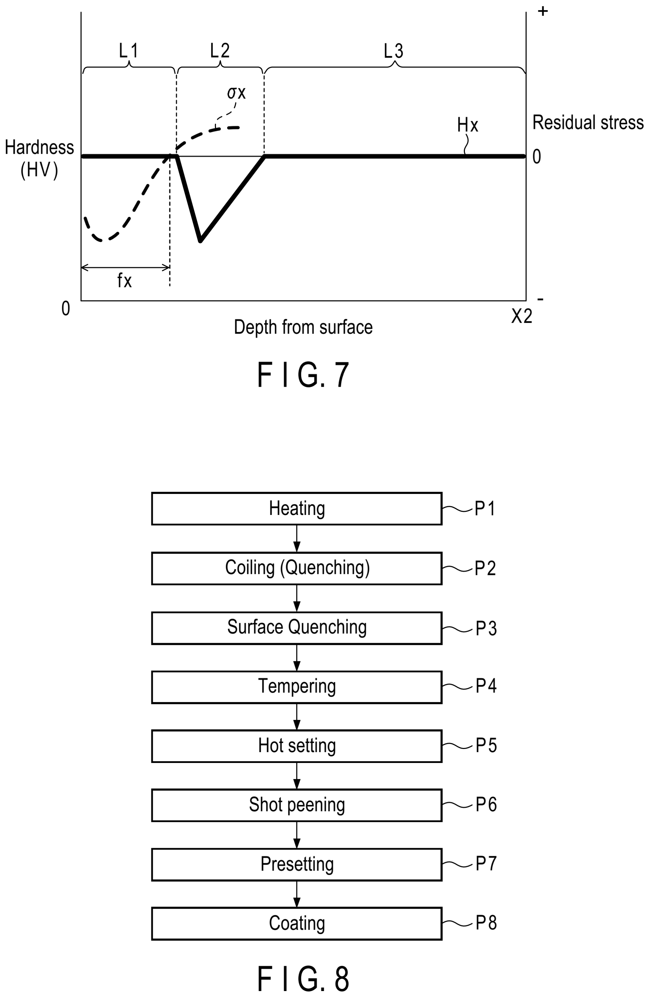

FIG. 7 is a graph showing a hardness distribution Hx and a residual stress distribution ox according to a comparative example. In this comparative example, the compressive residual stress is provided over a range fx from the surface 20. The range fx overlaps the first layer L1, but does not overlap the second layer L2 and the third layer L3.

Commonly, the risk of breaking resulting from inclusions is less in the area provided with the compressive residual stress and the area with the reduced hardness. With respect to this point, the comparative example of FIG. 7 has an area with a low residual stress and a high hardness near the boundary between the first layer L1 and the second layer L2. This area involves a higher risk of breaking resulting from inclusions.

For example, the relationship between the hardness distribution Hx and the residual stress distribution σx in the comparative example of FIG. 7 may result from applying the hardness distribution uniformed in the circumferential direction Dθ to the wire 2. As described above, the range provided with the compressive residual stress by the shot peening tends to be shallower on the inner diameter side and deeper on the outer diameter side. Thus, the hardness distribution uniformed in the circumferential direction Dθ of the wire 2 has the risk of failing to make the area with the reduced hardness suitably overlap the area provided with the compressive residual stress at a given position in the circumferential direction Dθ.

Widening the second layer L2 at each position in the circumferential direction Dθ makes the area with lower compressive residual stress overlap the area with the reduced hardness. However, increasing the proportion of the soft second layer L2 in this manner has the risk of decreasing the settling resistance of the coil spring 1.

In contrast, as in the examples of FIG. 5 and FIG. 6, forming the hardness distributions H1 and H2 according to the residual stress distributions σ1 and σ2 achieves both securing the settling resistance and improving corrosion fatigue strength while minimizing the risk of breaking resulting from inclusions.

The hardness distribution and the residual stress distribution described with reference to FIG. 2 to FIG. 6 are applicable to any of the effective portion 10, the first end turn portion 11, and the second end turn portion 12. Each of the hardness distribution and the residual stress distribution may be substantially the same over the effective portion 10, the first end turn portion 11, and the second end turn portion 12. Alternatively, each of the hardness distribution and the residual stress distribution may differ between the effective portion 10, the first end turn portion 11, and the second end turn portion 12.

The second layer L2 may be provided in a portion of the wire 2 in the length direction along the axis X2. The wire 2 may consist of a hard layer in its center and two soft layers around the hard layer, or may consist of four or more layers in which adjacent layers have different hardness levels.

The hardness distribution of the wire 2 in the circumferential direction Dθ does not have to be adjusted according to the residual stress and may instead be adjusted according to other characteristics such as the structure of the wire 2.

The hardness distribution of the wire 2 shown in FIG. 3 to FIG. 6 as examples does not have to differ at all positions in the circumferential direction Dθ. For example, in cases where a third line segment that connects the third position of the surface 20 with the axis X2 is provided in addition to the first line segment V1 and the second line V2, the hardness distribution along the third line segment may be the same as either the first hardness distribution H1 or the second hardness distribution H2.

Next, a manufacturing method of the coil spring 1 will be described. As an example, the following assumes cases where the coil spring 1 having the configuration shown in FIG. 2 to FIG. 6 is manufactured.

FIG. 8 is a flowchart showing an example of the manufacturing method of the coil spring 1. This example corresponds to what is called hot forming. In this example, the wire 2 in a liner shape is heated first (process P1). Further, the wire 2, which has become hot by heating in the process P1 is formed into a helical shape by a coiling machine (process P2). The wire 2 is quenched in these processes P1 and P2.

Surface quenching is performed to reduce the hardness of the interior near the surface 20 of the wire 2 after the process P2 (process P3). The process P3 forms the second layer L2 with the reduced hardness as shown in FIG. 3 to FIG. 6. Then, tempering is performed on the wire 2 (process P4).

After the process P4, hot setting which applies an excessive load to the wire 2 is conducted with the wire 2 being heated (process P5). Then, shot peening is performed on the wire 2 (process P6). This shot peening provides the compressive residual stress like that shown, for example, in FIG. 5 and FIG. 6 to the wire 2.

After the process P6, presetting is performed on the wire 2 (process P7). Then, the coating film 21 is formed as a whole on the wire 2 (process P8). The process 8 completes the coil spring 1.

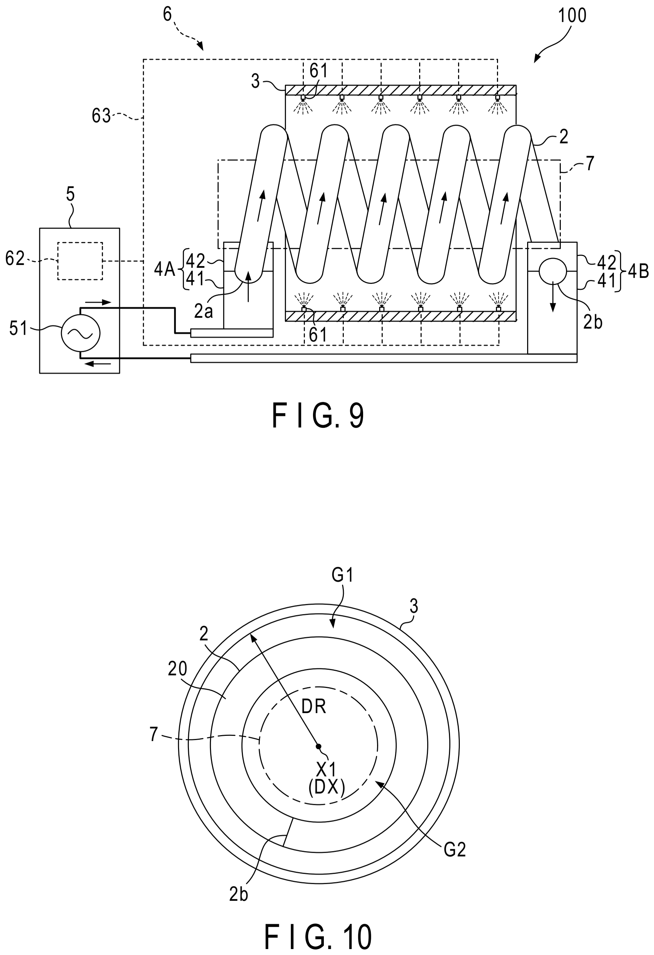

FIG. 9 is a diagram showing a schematic configuration of an alternating current heating device 100 (hereinafter referred to as a heating device 100) usable in the surface quenching in the process P3. The heating device 100 comprises a conductor 3, a first terminal 4A, a second terminal 4B, and a control unit 5.

The conductor 3 is formed, for example, in a cylindrical shape and can be formed of a metal material with high electrical conductivity such as copper and aluminum. The conductor 3 may have a stacked layer structure of a conductive layer formed of a metal material and an insulating layer formed of a resin and the like.

The control unit 5 comprises a power source 51 for supplying alternating current. The first terminal 4A and the second terminal 4B are connected to the power source 51 via wiring lines. The frequency of the alternating current supplied by the power source 51 is not limited. For example, a high frequency of 1 kHz or higher can be used.

In the example of FIG. 9, each of the first terminal 4A and the second terminal 4B is divided into a lower portion 41 and an upper portion 42. The first terminal 4A and the second terminal 4B can be attached to the wire 2 by these lower portion 41 and upper portion 42 clamping a portion of the wire 2. However, the configuration for attaching the first terminal 4A and the second terminal 4B to the wire 2 is not limited to this example.

In the heating treatment performed by the heating device 100, the first terminal 4A and the second terminal 4B are attached to the wire 2 formed into a helical shape, and the wire 2 is provided inside the conductor 3. The implementation order of the process of attaching the first terminal 4A and the second terminal 4B to the wire 2 and the process of providing the wire 2 inside the conductor 3 is not particularly limited.

In the example of FIG. 9, a portion of the wire 2 near the first terminal 2a and a portion of the wire 2 near the second terminal 2b (at least part of the end turn portions 11 and 12) protrude from the both end portions of the conductor 3. The configuration is not limited to this example. The entire wire 2 may be surrounded by the conductor 3.

In the example of FIG. 9, the lower portion 41 and the upper portion 42 of the first terminal 4A clamp the portion of the wire 2 near the first terminal 2a. The lower portion 41 and the upper portion 42 of the second terminal 4B clamp the portion of the wire 2 near the second terminal 2b.

Attaching the first terminal 4A and the second terminal 4B to the wire 2 form a circuit in which these elements and the power source 51 are connected in series. The control unit 5 starts applying current to the wire 2 in response to the operation of a switch by an operator or the receipt of a control signal from the outside. FIG. 9 shows an example of the flowing direction of current by the solid arrows. This direction periodically changes according to the frequency of the power source 51.

This current application heats at least part of the wire 2. At this time, the proximity effect described later occurs between the conductor 3 and the wire 2. The conductor 3 is provided at the position where this proximity effect occurs.

The frequency, amplitude, and time of applying of alternating current can be appropriately determined according to the properties of the wire 2 (for example, wire diameter, cross-sectional shape, coil diameter, pitch, number of turns, coil length, and material property), the area to be heated, and the target temperature for heating. When the timing to stop heating comes, the control unit 5 stops current application from the power source 51.

Then, the wire 2 is cooled. This cooling may be natural cooling. If rapid cooling is required, cooling may be performed by spraying a fluid such as water or air to the wire 2. In the example of FIG. 9, the heating device 100 comprises a cooling mechanism 6 to perform spraying of such fluid.

For example, the cooling mechanism 6 comprises multiple nozzles 61 provided on the inner surface of the conductor 3, a fluid supply source 62 in the control unit 5, and a piping 63 connecting each nozzle 61 to the fluid supply source 62. For example, the fluid supply source 62 supplies fluid to each of the nozzles 61 through the piping 63 under the control of the control unit 5. At this time, each of the nozzles 61 sprays fluid toward the wire 2. The nozzles 61 may not be provided on the conductor 3, but may be provided on a member different from the conductor 3.

The heating device 100 may further comprise a ferromagnetic body 7 placeable near the wire 2. For example, the ferromagnetic body 7 is formed of ferrite, but is not limited to this example. In the example of FIG. 9, the ferromagnetic body 7 is inserted inside the wire 2 formed into a helical shape.

FIG. 10 is a schematic side view of the wire 2, the conductor 3, and the ferromagnetic body 7 that are assembled in the manner shown in FIG. 9. The conductor 3 is in a cylindrical shape, for example, around the coil axis X1. The conductor 3 is electrically floating and insulated from other conductive elements such as the wire 2. The conductor 3 is supported, for example, by an insulating member (not shown).

A gap G1 is formed between the conductor 3 and the wire 2. That is, the inner surface of the conductor 3 faces a portion in the outer diameter side of the surface 20 of the wire 2 (portion including the second position Q2) via the gap G1.

The ferromagnetic body 7 has a columnar shape, for example, around the coil axis X1. The ferromagnetic body 7 may have other shapes such as a cylindrical shape around the coil axis X1. The ferromagnetic body 7 is electrically floating as well and insulated from other conductive elements such as the wire 2 and the conductor 3. The ferromagnetic body 7 is supported, for example, by an insulating member (not shown).

A gap G2 is formed between the ferromagnetic body 7 and the wire 2. That is, the outer surface of the ferromagnetic body 7 faces a portion in the inner diameter side of the surface 20 (portion including the first position Q1) of the wire 2 via the gap G2.

The following describes the function of the conductor 3. What is called the proximity effect occurs when electric current flows through a workpiece such as the wire 2 and an electrically floating conductor is provided in its vicinity. The present embodiment utilizes this proximity effect to control the current density distribution (heating temperature distribution) of the wire 2.

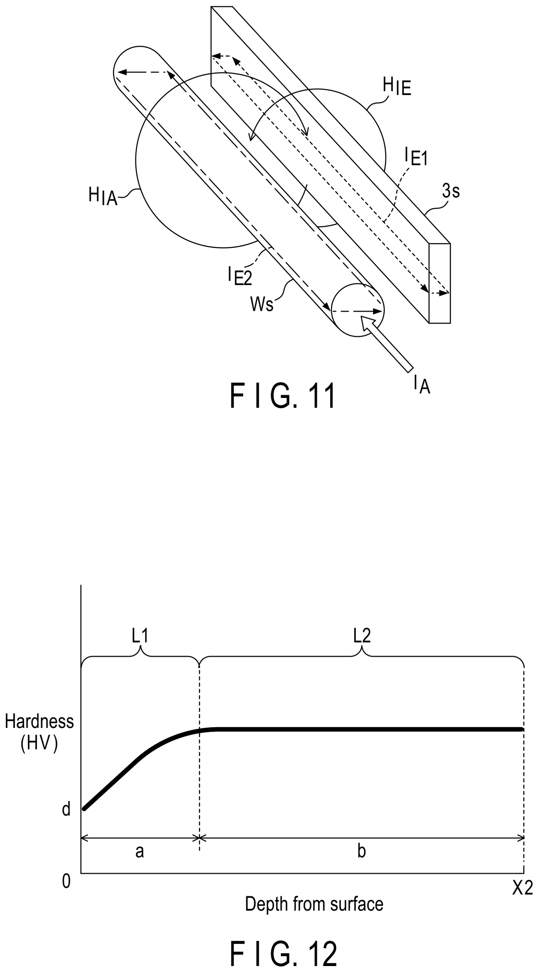

FIG. 11 is a schematic diagram to illustrate the proximity effect, showing a bar-shaped workpiece Ws and a conductor 3s provided in its vicinity. When a current I_{A} from the power source flows to the workpiece Ws, a magnetic field H_{IA} is generated around the workpiece Ws (Ampere's law).

In the conductor 3s, an eddy current I_{E1} is generated due to this magnetic field H_{IA} (Lenz's law). Furthermore, a magnetic field H_{IE} is generated around the conductor 3s due to the eddy current I_{E1}. When this magnetic field H_{IE} acts on the workpiece Ws, an eddy current I_{E2} is generated in the workpiece Ws.

The directions of flow of the current I_{A}, the eddy current I_{E1}, and the eddy current I_{E2} are indicated by the arrows in the figure. In other words, in the workpiece Ws, the current I_{A} and the eddy current I_{E2} flow in directions opposite to each other near the side surface that is far from the conductor 3s. In contrast, the current I_{A} and the eddy current I_{E2} flow in the same direction near the side surface that is close to the conductor 3s. Thus, the current density of the workpiece Ws is higher near the side surface that is close to the conductor 3s.

Utilizing this proximity effect enables controlling the current density distribution and the heating temperature distribution of the workpiece Ws. For example, providing the conductor 3s to face a portion of the outer surface of the workpiece Ws as shown in FIG. 11 can yield the current density distribution and the heating temperature distribution that vary according to a circumferential position on the surface and the inside of the workpiece Ws. These distributions can be appropriately adjusted, for example, by the distance between the conductor 3s and the workpiece Ws.

Further, providing the conductor 3s to face only a portion of the workpiece Ws in the longitudinal direction of the workpiece Ws can yield the current density distribution and the heating temperature distribution that vary according to the longitudinal position on the surface and the inside of the workpiece Ws.

When alternating current flows through the wire 2, the skin effect occurs. This increases the current density of the area near the surface 20. Utilizing this can intensively heat a portion close to the surface 20 and form the second layer L2 like that shown in FIG. 2 on the heated portion. The depth of the second layer L2 from the surface 20 can be adjustable, for example, by time of applying current (heating time), the frequency of alternating current, and the gap G1 between the wire 2 and the conductor 3.

Furthermore, in the wire 2 formed into a helical shape, a current path passing through a portion in the inner diameter side of the surface 20 is short. Thus, the current density near the portion in the inner diameter side is likely to increase. The heating device 100 provides a desired hardness distribution varying in the circumferential direction Dθ to at least part of the wire 2 by controlling this current density distribution using the proximity effect of the conductor 3.

The current density distribution and the heating temperature distribution can be controlled by the material property of the ferromagnetic body 7, the gap G2 between the wire 2 and the ferromagnetic body 7, and the like. The ferromagnetic body 7 has the function of influencing the magnetic flux produced at the time of current application to the wire 2 and spreading the current density to the outer diameter side. Utilizing the flux-guiding function of ferromagnetic body 7 in addition to the proximity effect of conductor 3 enables more precise control of the current density of the wire 2 and, consequently, yields a suitable hardness distribution.

The hardness distribution provided to the wire 2 by the heating device 100 is not limited to those shown in FIG. 3 to FIG. 6. FIG. 12 is a graph showing another example of the hardness distribution that can be provided to the wire 2. In the example of FIG. 12, hardness is low near the surface 20 and gradually increases toward the axis X2.

That is, in this example of FIG. 12, the wire 2 includes the first layer L1 and the second layer L2 inside thereof, with the first layer L1 having lower hardness than the second layer L2. In the wire 2 having such hardness distribution in the radial direction DR, the hardness distribution in the circumferential direction Dθ may vary as in the examples described with reference to FIG. 2 to FIG. 6.

More specifically, as in the examples of FIG. 2 to FIG. 6, the first hardness distribution H1 along the first line segment V1 connecting the first position Q1 with the axis X2 and the second hardness distribution H2 along the second line segment V2 connecting the second position Q2 with the axis V2 may differ. As shown in FIG. 2, the first position Q1 and the second position Q2 may be respectively on the inner diameter side and the outer diameter side of the wire 2, or may be provided on other parts of the surface 20.

A difference between the first hardness distribution H1 and the second hardness distribution H2 results from at least one of the width a of the first layer L1, the width b of the second layer L2, and the minimum value d of the hardness in the first layer L1 in the first hardness distribution differing from those of the second hardness distribution.

Use of the heating device 100 can form the hardness distribution in the example of FIG. 12 as well. Further, the use of the heating device 100 can vary the hardness distribution in this shape in the circumferential direction Dθ as well. Further, the manufacturing method adopting the heat treatment by the heating device 100 can provide the coil spring 1 whose wire 2 has the improved properties in the circumferential direction Dθ in various aspects.

The embodiment described above does not limit the scope of the present invention to the configuration disclosed in the embodiment. The present invention can be carried out by modifying the configuration disclosed in the embodiment into various aspects.

### Reference Signs List

1 ... Coil spring, 2 ... Wire, X1 ... Coil axis, X2 ... Axis of wire, DX ... Axis direction, DR ... Radial direction, Dθ ... Circumferential direction, L1 ... First layer, L2 ... Second layer, L3 ... Third layer, H1 ... First hardness distribution, H2 ... Second hardness distribution, σ1 ... First residual stress distribution, σ2 ... Second residual stress distribution, 100 ... Heating device

## Claims

1. A coil spring formed of a wire wound into a helical shape, wherein
at least part of the wire has a hardness distribution varying in a circumferential direction around an axis of the wire.

2. The coil spring of claim 1, wherein
the wire includes a first layer, a second layer inside the first layer, and a third layer inside the second layer, and
hardness of the second layer is lower than those of the first layer and the third layer.

3. The coil spring of claim 2, wherein
a surface of the wire has a first position and a second position spaced apart from the first position in the circumferential direction, and
a first hardness distribution along a first line segment connecting the first position with the axis and a second hardness distribution along a second line segment connecting the second potion with the axis differ.

4. The coil spring of claim 3, wherein
the first hardness distribution and the second hardness distribution differ in at least one of a width of the first layer, a width of the second layer, a width of the third layer, a minimum value of hardness in the second layer, and a depth of a position with the minimum value from the surface.

5. The coil spring of claim 3, wherein
compressive residual stress is provided to each of a first range along the first line segment and a second range along the second line segment,
the second range extends deeper than the first range from the surface, and
a portion of the second layer along the second line segment is located at a position deeper than a portion of the second layer along the first line segment from the surface.

6. The coil spring of claim 5, wherein
the first position is located on an inner diameter side of the wire, and
the second position is located on an outer diameter side of the wire.

7. The coil spring of claim 1, wherein
the wire includes a first layer and a second layer inside the first layer, and
hardness of the first layer is lower than that of the second layer.

8. The coil spring of claim 7, wherein
a surface of the wire has a first position and a second position spaced apart from the first position in the circumferential direction, and
a first hardness distribution along a first line segment connecting the first position with the axis and a second hardness distribution along a second line segment connecting the second potion with the axis differ.

9. The coil spring of claim 8, wherein
the first hardness distribution and the second hardness distribution differ in at least one of a width of the first layer, a width of the second layer, and a minimum value of hardness in the first layer.

10. A manufacturing method of the coil spring of any one of claims 1 to 9, comprising:
forming the wire into a helical shape;
attaching a first terminal and a second terminal connected to a power source, which is capable of supplying alternating current, to the wire; and
forming a hardness distribution varying in the circumferential direction on at least part of the wire by heating the wire by applying alternating current thereto through the first terminal and the second terminal.

11. The manufacturing method of the coil spring of claim 10, further comprising:
providing a conductor that is electrically floating at a position that generates proximity effect before applying the alternating current to the wire.

12. The manufacturing method of the coil spring of claim 10, further comprising:
performing shot peening on the wire formed into the helical shape to provide compressive residual stress to the wire.
